# EUROPEAN PATENT APPLICATION

(11) **EP 4 249 771 A1**
(43) Date of publication of application: **27.09.2023**
(21) Application number: 22176076.2
(22) Date of filing: 30.05.2022
(51) Int. Cl.: F16H 49/00

(54) **FLEX SPLINE ENGAGING STRUCTURE AND FLEX SPLINE**

(30) Priority: 24.03.2022 TW 111111123
(71) Applicant: Tung Pei Industrial Co., Ltd., Tapei City 106 (TW)
(72) Inventor: YU, Wei-Kuei, 334 Taoyuan City (TW)
(74) Representative: Melchior, Robin

(57) **Abstract**

A flex spline engaging structure (100) provides with a flex spline (10) having a flexible wall (12). An outer peripheral surface of the flexible wall (12) has a teeth portion (121). A front-end edge of the flexible wall (12) is connected to a ring disk (14) extending inwards. A connecting base (16) formed by an inner peripheral edge of the ring disk (14) has a threaded section (161) and a friction surface (162) connected to the threaded section (161). The threaded section (161) is engaged with a threaded section (223) of a mating part (20). A friction surface (224) is formed on a portion of the mating part (20) connected to the threaded section (223) of the mating part (20). The flex spline (10) transmits torque to the mating part (20) through a friction between the friction surface (162) of the connecting base (16) and the friction surface (224) of the mating part (20).

## Description

### BACKGROUND

### Technical Field

The present invention relates generally to an engaging structure of a harmonic drive, and more particularly to a flex spline engaging structure and a flex spline.

### Description of Related Art

Conventional harmonic drives are classified into a cup style harmonic drive and a hat style harmonic drive, and include a circular spline, a flex spline, and a wave generator. The wave generator makes the flex spline deform and mesh with the circular spline, so that a shaft work inputted by the wave generator could be outputted by the flex spline or the circular spline after a speed reduction of the harmonic drive.

Typically, when the flex spline of the conventional cup style harmonic drive is engaged with an output end of a mating part, a connecting base is formed on an end surface of the flex spline which is a cup shape, wherein a plurality of through-holes penetrates through and is arranged at intervals around a portion of the connecting base which has a thicker thickness on an axial direction. Each of the through-holes is penetrated by a fixing member of a bolt and nut assembly, allowing the flex spline to be fixed to the output end of the mating part, so that the flex spline could transmit torque to the mating part. Consequently, an axial length of the cup style harmonic drive is larger, and a middle of the cup style harmonic drive lacks a sufficient room for wires to pass through, and a weight of the cup style harmonic drive is heavier.

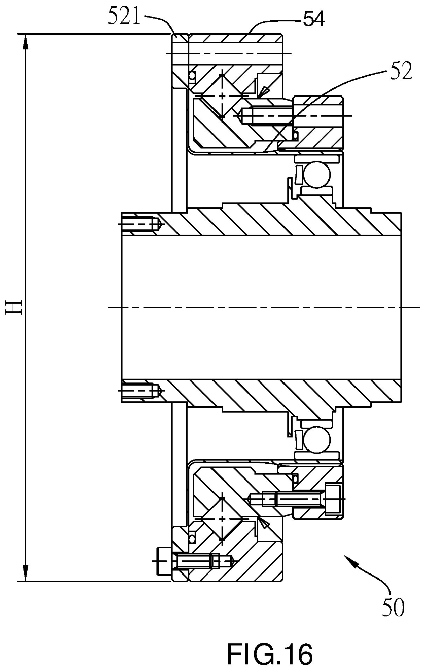

As shown in FIG. 16, a flex spline 52 of a hat style harmonic drive 50 is a hat shape and has a brim portion 521 which radially extends outwards, wherein the brim portion 521 is adapted to be engaged with a mating part 54. Although a middle of the flex spline 52 which is a hat shape has a sufficient room for wires to pass through, an outer diameter of the hat style harmonic drive 50, which applies the flex spline 52 having a hat shape, is larger due to the brim portion 521 is a structure radially extending outwards. In some cases, an outer diameter H of the hat style harmonic drive 50 could reach 110 mm, which is not conducive to reducing volume and weight.

When the conventional flex spline, which is cup-shaped or hat-shaped, is applied to a field which is demanding of weights, for example, when a harmonic drive is applied to an electric bike, a weight of the locking members, an additional weight of the connecting base of the flex spline for arranging the fixing members, or an additional weight caused by increasing an outer diameter H of the harmonic drive due to installing the flex spline which is hat-shaped, are the problems needed to be solved.

### SUMMARY OF THE INVENTION

In view of the above, the primary objective of the present invention is to provide a flex spline engaging structure, which could reduce a weight and an axial length of a flex spline by omitting fixing members.

The present invention provides a flex spline engaging structure, including a flex spline and a mating part. The flex spline has a flexible wall, wherein an outer peripheral surface of the flexible wall has a teeth portion. A front-end edge of the flexible wall is connected to a ring disk which extends inwards. A connecting base is formed by an inner peripheral edge of the ring disk, and protrudes along an axial direction of the flex spline relative to the ring disk. An inner peripheral surface or an outer peripheral surface of the connecting base has a threaded section, wherein a portion of the connecting base which is connected to the threaded section has a connecting friction surface. The mating part has a fixing portion, wherein the fixing portion has a threaded section. A portion of the fixing portion which is connected to the threaded section has a friction surface. The threaded section of the fixing portion is engaged with the threaded section of the connecting base, and the friction surface of the fixing portion abuts against the friction surface of the connecting base. The flex spline transmits torque to the mating part through a friction between the friction surface of the connecting base and the friction surface of the fixing portion.

With the aforementioned design, when the fixing portion of the mating part is engaged with the connecting base of the flex spline, the threaded section of the fixing portion is engaged with the threaded section of the connecting base, and the friction between the friction surface of the connecting base and the friction surface of the fixing portion allows the flex spline to transmit torque to the mating part. As the connection between the mating part and the flex spline does not require an additional fixing member, a weight of the fixing member could be avoided. Moreover, as the connecting base does not require to provide with a through hole matching with the fixing member, an inner diameter of the connecting base could be widened. In comparison with the hat style harmonic drive, the present invention could further reduce the weight and the overall volume, and at the same time provide a larger inner room for electric wires or signal wires to pass through, eliminating a disadvantage of the hat style harmonic drive which has a larger diameter and a heavier weight. In addition, the present invention could replace the hat style harmonic drive in same model. With the same amount of torque, the present invention could greatly reduce a volume and thereby a weight of the harmonic drive.

### BRIEF DESCRIPTION OF THE DRAWINGS

The present invention will be best understood by referring to the following detailed description of some illustrative embodiments in conjunction with the accompanying drawings, in which
FIG. 1 is a perspective view of the flex spline engaging structure according to a first embodiment of the present invention;
FIG. 2 is an exploded view of the flex spline engaging structure according to the first embodiment of the present invention;
FIG. 3 is a sectional view along the 3-3 line in FIG. 1;
FIG. 4 is a sectional view of the flex spline shown in FIG. 3;
FIG. 5 is a perspective view of the flex spline engaging structure according to a second embodiment of the present invention;
FIG. 6 is an exploded view of the flex spline engaging structure according to the second embodiment of the present invention;
FIG. 7 is a sectional view along the 7-7 line in FIG. 5;
FIG. 8 is a perspective view of the flex spline engaging structure according to a third embodiment of the present invention;
FIG. 9 is an exploded view of the flex spline engaging structure according to the third embodiment of the present invention;
FIG. 10 is a sectional view along the 10-10 line in FIG. 8;
FIG. 11 is a sectional view of the flex spline shown in FIG. 10
FIG. 12 is a perspective view of the flex spline engaging structure according to a fourth embodiment of the present invention;
FIG. 13 is an exploded view of the flex spline engaging structure according to the fourth embodiment of the present invention;
FIG. 14 is a sectional view along the 14-14 line in FIG. 12;
FIG. 15 is a sectional view of the flex spline engaging structure according to a fifth embodiment of the present invention applied to the harmonic drive; and
FIG. 16 is a sectional view of the conventional hat style harmonic drive.

### DETAILED DESCRIPTION OF THE INVENTION

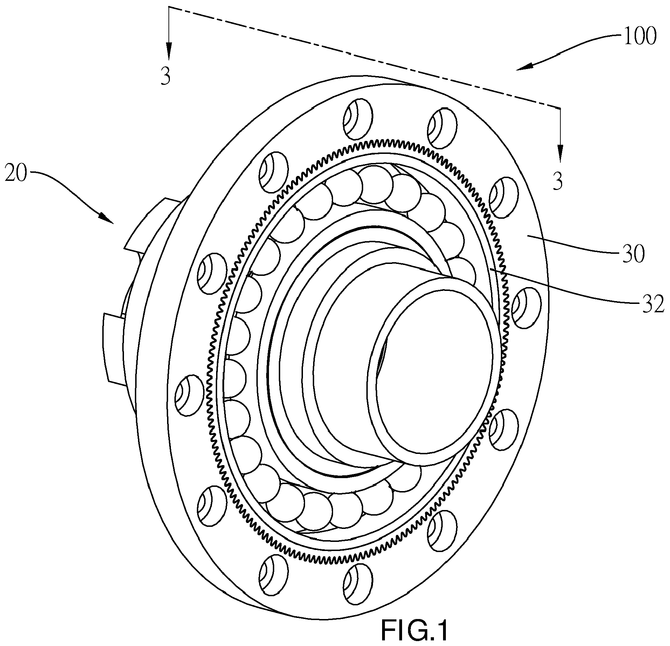

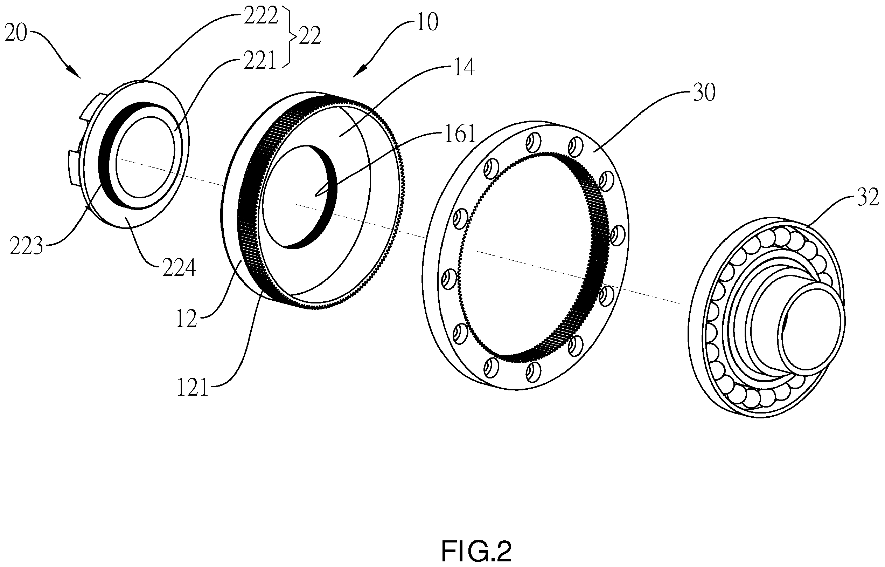

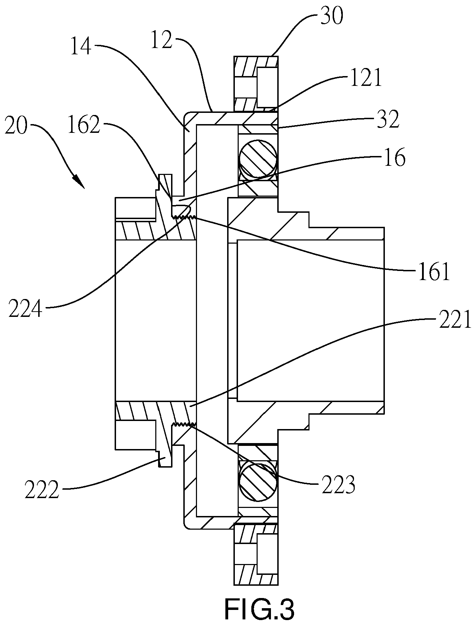

A flex spline engaging structure 100 according to a first embodiment of the present invention is illustrated in FIG. 1 to FIG. 4, including a flex spline 10 and a mating part 20 engaged with the flex spline 10, so that the flex spline engaging structure 100 could transmit torque to the mating part 20.

The flex spline 10 is a cup shape and has a flexible wall 12, wherein the flexible wall 12 is an annular thin wall, so that upon experiencing a force along a radial direction of the flex spline 10, the flexible wall 12 deforms along the radial direction. The flexible wall 12 is disposed around an axis of the flex spline 10, wherein two opposite sides of the flex spline 10 along an axial direction are defined as a front side and a rear side respectively. A teeth portion 121 is disposed around an outer peripheral surface of the flexible wall 12. The flexible wall 12 is connected to a ring disk 14, wherein a front-end edge of the flexible wall 12 extends inwards (i.e., towards the axis of the flex spline 10) to form the ring disk 14. In the current embodiment, the ring disk 14 is formed by extending inwards along the radial direction of the flex spline 10, and an inner peripheral edge of the ring disk 14 forms a connecting base 16, wherein the connecting base 16 protrudes forwards along the axis relative to the ring disk 14. An inner peripheral surface of the connecting base 16 has a threaded section 161, wherein a portion of the connecting base 16 connected to the threaded section 161 of the connecting base 16 has a friction surface 162. An angle, which is greater than 0 degrees and smaller than 180 degrees, is formed between the friction surface 162 of the connecting base 16 and the inner peripheral surface of the connecting base 16. In the current embodiment, the friction surface 162 of the connecting base 16 is formed on a front-end surface of the connecting base 16 in the axial direction of the flex spline 10 and surrounds the threaded section 161 of the connecting base 16. The friction surface 162 of the connecting base 16 is perpendicular to the inner peripheral surface of the connecting base 16. An inner side of the connecting base 16 has a through hole 163, wherein the through hole 163 communicates with a room inside the flexible wall 12.

The mating part 20 is a mechanism which could be driven by the flex spline 10, wherein the mating part 20 has a fixing portion 22 adapted to be engaged with the flex spline 10. In the current embodiment, the fixing portion 22 includes an annular body 221 and a protruding ring 222 connected to a radial outside of the annular body 221, wherein an outer diameter of the protruding ring 222 is larger than an outer diameter of the annular body 221. An outer peripheral surface of the annular body 221 has a threaded section 223 connected to the protruding ring 222, and a friction surface 224 is formed on a side surface of the protruding ring 222 facing towards the connecting base 16. When the mating part 20 is engaged with the flex spline 10 via the fixing portion 22, the threaded section 223 of the annular body 221 is engaged with the threaded section 161 of the connecting base 16, and the friction surface 224 of the protruding ring 222 abuts against the friction surface 162 of the connecting base 16. When the flex spline 10 is applied to a harmonic drive or a reducing device of the harmonic drive, the flex spline 10 could transmit torque to the mating part 20 through a friction between the friction surface 162 of the connecting base 16 and the friction surface 224 of the protruding ring 222.

As shown in FIG.1 to FIG. 4, when the flex spline 10 is applied to a harmonic drive, a circular spline 30 and a wave generator 32 are disposed respectively on a radial outside and a radial inside of a portion of the flexible wall 12 where the teeth portion 121 is disposed. An outer peripheral surface of the wave generator 32 is slightly elliptical, and two opposite sides of a diameter of the wave generator 32 abut against an inner peripheral surface of the flexible wall 12, allowing the flexible wall 12 to slightly deform and mesh with the circular spline 30 via two opposite sides of the teeth portion 121. When a shaft work is inputted by a wave generator 32, the shaft work would be transmitted outwards by the flex spline 10.

When the fixing portion 22 of the mating part 20 is engaged with the connecting base 16 of the flex spline 10, the threaded section 223 of the fixing portion 22 is engaged with the threaded section 161 of the connecting base 16, and the friction between the friction surface 162 of the connecting base 16 and the friction surface 224 of the protruding ring 222 allows the flex spline 10 to transmit torque to the mating part 20 in a way of a unidirectional rotation. In this way, the connection between the mating part 20 and the flex spline 10 does not require an additional fixing member (e.g. a bolt and nut assembly), thereby reducing the weight.

Additionally, the connecting base 16 does not have to provide a hole for arranging fixing members since the fixing members are omitted, thereby widening an inner diameter of the connecting base 16. In this way, a radial thickness of one side of the connecting base 16 could be minimized to 1 mm. Apart from reducing a weight of the connecting base 16, the through hole 163 which is widened could also provide a sufficient room for electric wires or signal wires to pass through, which is suitable for being applied to a harmonic drive that has a limited room and requires reducing weight, such as an electric assistant motor module of a bike. The conventional electric bike is a design based on assisting manpower, and hence a torque is between 30 Nm and 95 Nm. However, the meshing structure of the threaded section 161 of the connecting base 16 and the threaded section 223 of the fixing portion 22 of the present invention could withstand a torque between 40 Nm and 120 Nm. Therefore, when the present invention is applied to a transmission with the torque less than or equal to 120 Nm, the connecting structure could not be broken easily by a force, and could benefit from the advantage of reducing weight and volume.

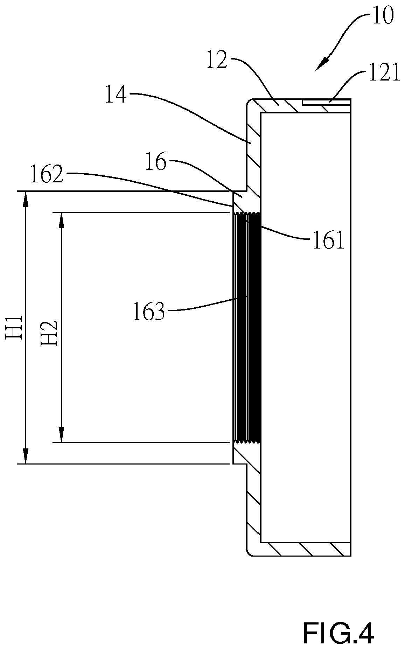

As shown in FIG. 4, in the current embodiment, a ratio of an inner diameter H2 of the connecting base 16 of the flex spline 10 to an outer diameter H1 of the connecting base 16 is greater than or equal to 0.6, such as 0.7 or 0.8, and a difference between the outer diameter H1 and the inner diameter H2 of the connecting base 16 is between 2 mm and 26 mm. When the difference between the outer diameter H1 and the inner diameter H2 of the connecting base 16 is 2 mm, the radial thickness of one side of the connecting base 16 is 1 mm, allowing the through hole 163 of the inner side of the connecting base 16 to provide a sufficient room for wires to pass through. In other embodiments, the ratio of the inner diameter H2 of the connecting base 16 to the outer diameter H1 of the connecting base 16 could range between 0.5 and 0.6 and be greater than 0.5, such as greater than 0.55.

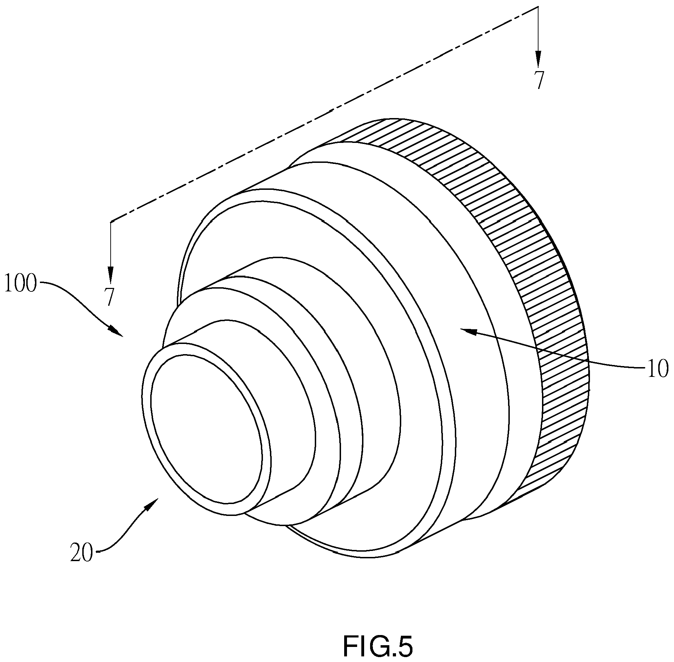

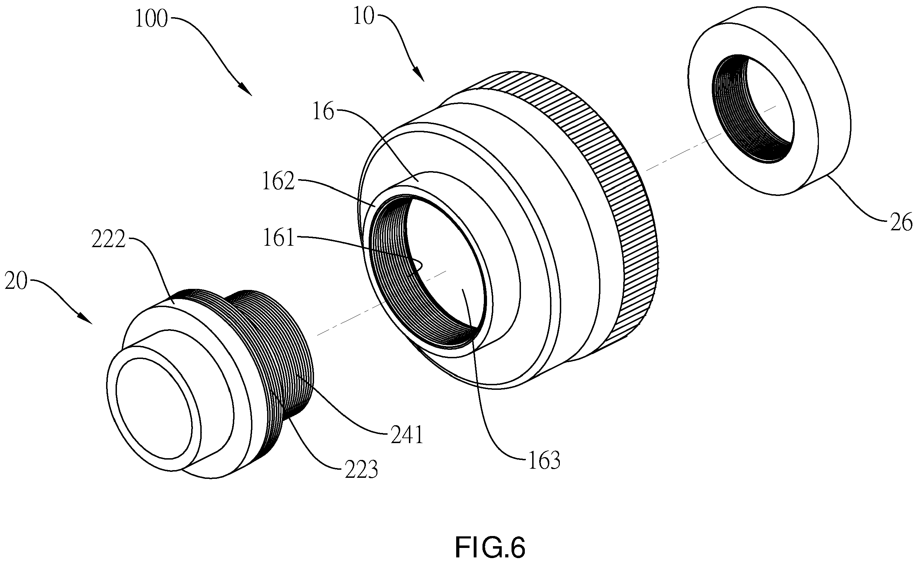

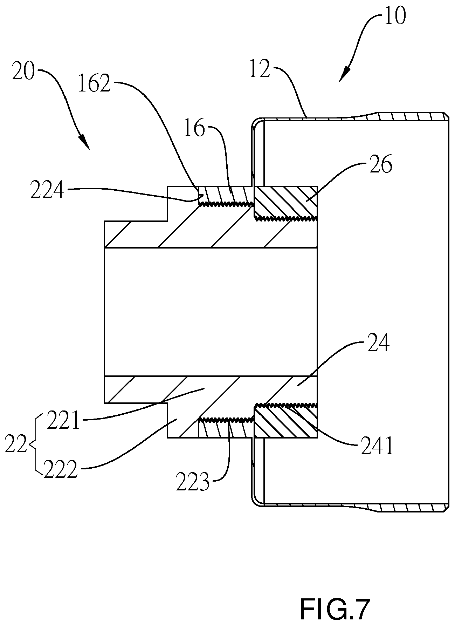

Apart from the first embodiment of the present invention, in which the flex spline 10 of the flex spline engaging structure 100 transmits torque to the mating part 20 in a way of a unidirectional rotation, a second embodiment of the present invention is illustrated in FIG. 5 to FIG. 7, wherein a flex spline 10 of a flex spline engaging structure 100 could transmit torque to a mating part 20 in a bidirectional way of a positive rotation or a negative rotation. For example, the flex spline engaging structure 100 could be applied to a driving module of a small robotic arm.

The flex spline engaging structure 100 according to the second embodiment also includes the flex spline 10 and the mating part 20. The structure of the flex spline 10 is the same as that of the first embodiment. A fixing portion 22 of the mating part 20 also includes an annular body 221 and a protruding ring 222 connected to an inner side of the annular body 221, wherein a threaded section 223 of an outer peripheral surface of the annular body 221 is engaged with a threaded section 161 of an inner peripheral surface of the connecting base 16, and a friction surface 224 of a side surface of the protruding ring 222 facing towards the connecting base 16 abuts against a friction surface 162 of a front end of the connecting base 16 in the axial direction of the flex spline 10.

In the current embodiment, the fixing portion 22 of the annular body 221 protrudes along the axial direction of the flex spline 10 to form a protruding portion 24. In the current embodiment, the protruding portion 24 is a circular ring and is located in a boundary surrounded by the flexible wall 12. An outer peripheral surface of the protruding portion 24 has a reversed threaded section 241, wherein a threaded direction of the reversed threaded section 241 is opposite to a threaded direction of the threaded section 223 of the fixing portion 22. A fixing nut 26 is engaged with the reversed threaded section 241 of the protruding portion 24, and abuts against a rear-end surface of the connecting base 16 opposite to the friction surface 224 of the protruding ring 222.

In the first embodiment and the second embodiment, the fixing portion 22 of the mating part 20 is tubular. However, in other embodiments, the fixing portion 22 of the mating part 20 could be a shaft (i.e., there is no through hole 163 formed in the fixing portion 22).

When the flex spline 10 according to the second embodiment transmits torque to the mating part 20 by a positive rotation, the flex spline 10 transmits torque to the mating part 20 by a friction between the friction surface 162 of the connecting base 16 and the friction surface 224 of the protruding ring 222. When the flex spline 10 according to the second embodiment transmits torque to the mating part 20 by a negative rotation opposite to the positive rotation, the flex spline 10 transmits torque to the mating part 20 by a friction between the fixing nut 26 and the rear-end surface of the connecting base 16. In this way, the flex spline 10 of the flex spline engaging structure 100 could bidirectionally transmit torque to the mating part 20.

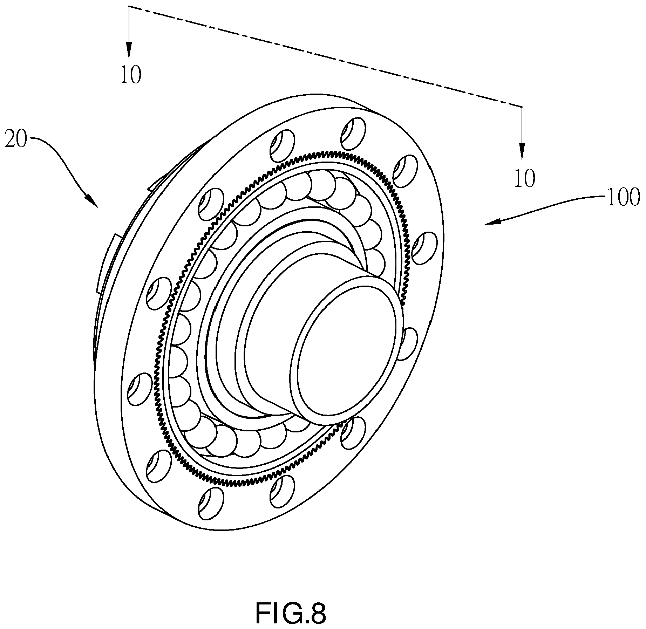

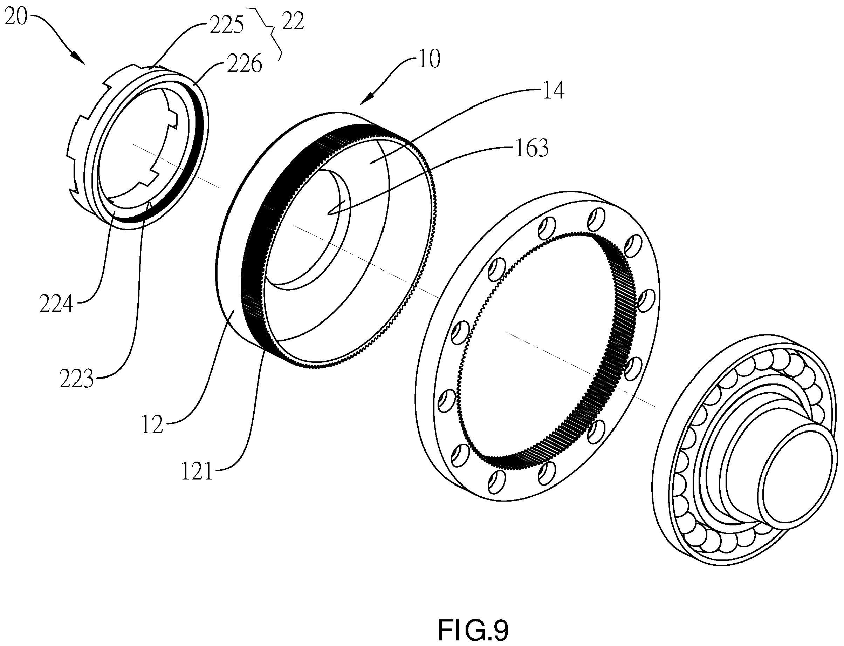

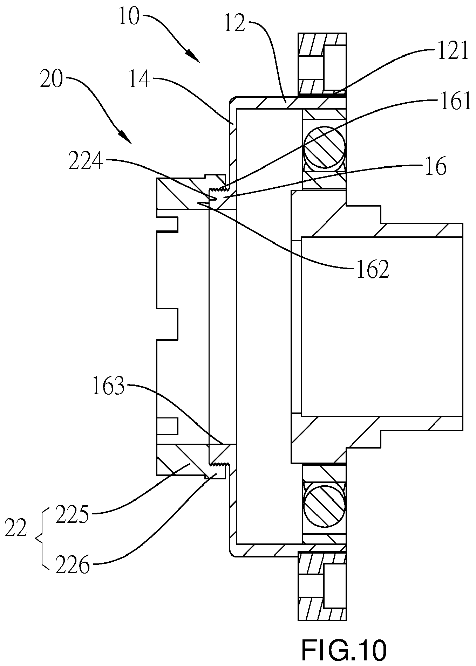

Apart from the first embodiment and the second embodiment of the present invention, in which the threaded section 161 of the connecting base 16 is formed on the inner peripheral surface of the connecting base 16 and is engaged with the threaded section 223 of the mating part 20, a flex spline engaging structure 100 according to a third embodiment of the present invention is illustrated in FIG. 8 to FIG. 10, wherein a threaded section 161 is provided on an outer peripheral surface of a connecting base 16 for being engaged with the mating part 20.

The flex spline engaging structure 100 according to the third embodiment also includes a flex spline 10 and a mating part 20. The flex spline 10 is a cup shape and has a flexible wall 12, wherein a teeth portion 121 is disposed around an outer peripheral surface of the flexible wall 12. The flexible wall 12 is connected to a ring disk 14 which extends inwards, and two opposite sides along an axial direction of the flex spline 10 are defined as a front side and a rear side respectively. The connecting base 16 is formed by an inner peripheral edge of the ring disk 14, and protrudes forwards along the axial direction relative to the ring disk 14. The outer peripheral surface of the connecting base 16 has the threaded section 161, wherein a portion of the connecting base 16 connected to the threaded section 161 of the connecting base 16 has a friction surface 162. An angle, which is greater than 0 degrees and smaller than 180 degrees, is formed between the friction surface 162 of the connecting base 16 and the threaded section 161 of the connecting base 16. In the current embodiment, the friction surface 162 of the connecting base 16 is formed on a front-end surface of the connecting base 16 along the axial direction of the flex spline 10, and the friction surface 162 of the connecting base 16 is perpendicular to the outer peripheral surface of the connecting base 16. An inner side of the connecting base 16 has a through hole 163 communicating with a room inside the flexible wall 12.

The mating part 20 has a fixing portion 22 which is adapted to be engaged with the flex spline 10. In the current embodiment, the fixing portion 22 includes a bottom ring 225 and an outer ring 226 which extends outwards along the axial direction from a periphery edge of an rear-end surface of the bottom ring 225, wherein an inner peripheral surface of the outer ring 226 has a threaded section 223 connected to the bottom ring 225. A friction surface 224 is formed on an end surface of the bottom ring 225 facing towards the connecting base 16. When the mating part 20 is engaged with the flex spline 10 via the fixing portion 22, the threaded section 223 of the fixing portion 22 is engaged with the threaded section 161 of the connecting base 16, and the friction surface 224 of the bottom ring 225 abuts against the friction surface 162 of the connecting base 16. When the flex spline 10 is applied to a harmonic drive or a reducing device of the harmonic drive, the flex spline 10 could transmit torque to the mating part 20 through a friction between the friction surface 162 of the connecting base 16 and the friction surface 224 of the bottom ring 225.

As shown in FIG. 8 to FIG. 10, when the mating part 20 is engaged with the connecting base 16 of the flex spline 10 via the fixing portion 22, the threaded section 223 of the fixing portion 22 is engaged with the threaded section 161 of the connecting base 16, and the friction between the friction surface 162 of the connecting base 16 and the friction surface 224 of the bottom ring 225 allows the flex spline 10 to transmit torque to the mating part 20 in a way of a unidirectional rotation.

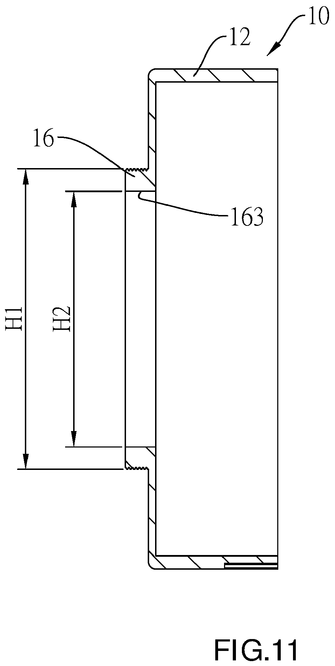

As shown in FIG. 11, in the current embodiment, a ratio of an inner diameter H2 of the connecting base 16 of the flex spline 10 to an outer diameter H1 of the connecting base 16 is greater than or equal to 0.6, allowing the through hole 163 of the inner side of the connecting base 16 to provide a sufficient room for wires to pass through. The flex spline engaging structure 100 according to the third embodiment also has the advantage of not requiring an additional fixing member such as a bolt and nut assembly, thereby reducing the weight. Moreover, an inner diameter of the connecting base 16 could be widened and a weight of the connecting base 16 could be lowered, allowing the through hole 163 to provide a sufficient room for electric wires or signal wires to pass through.

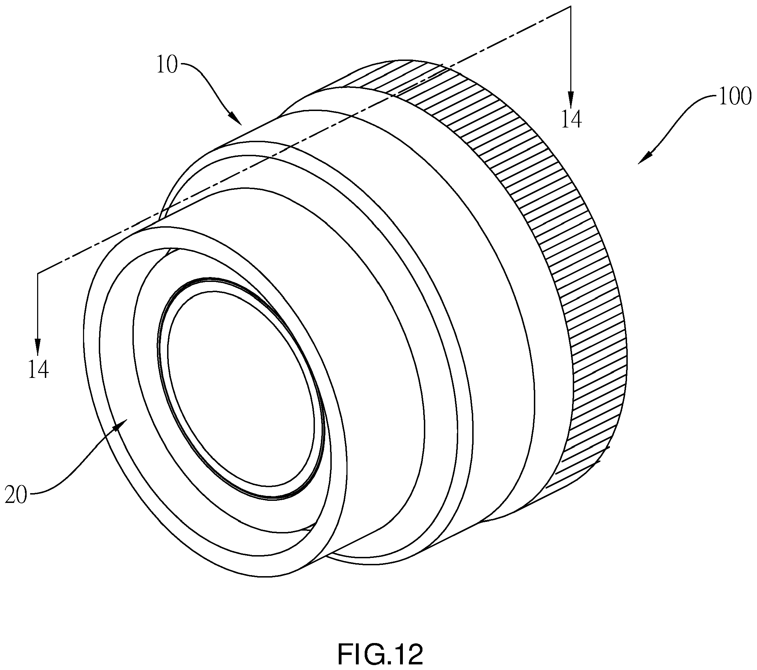

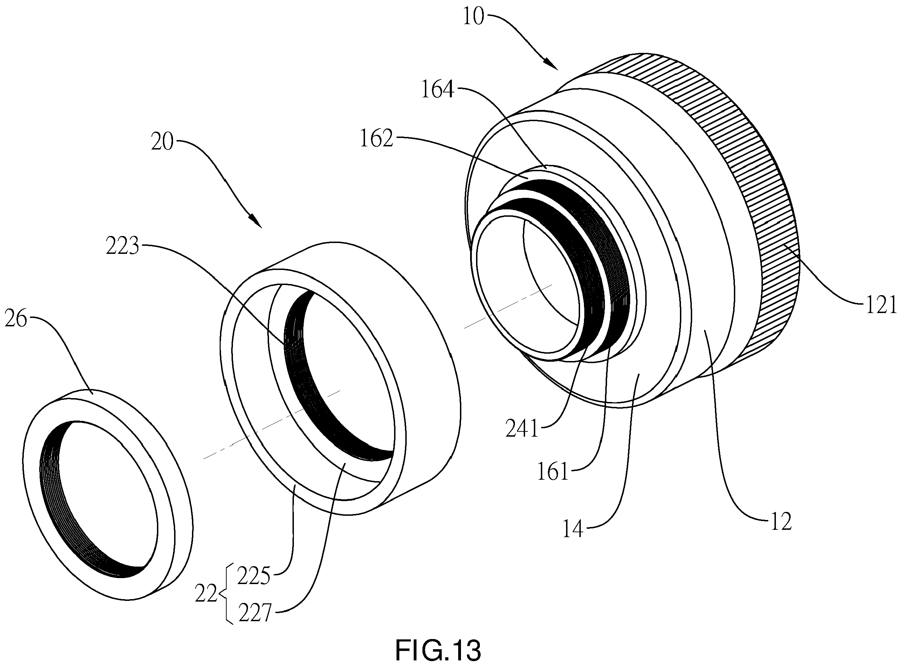

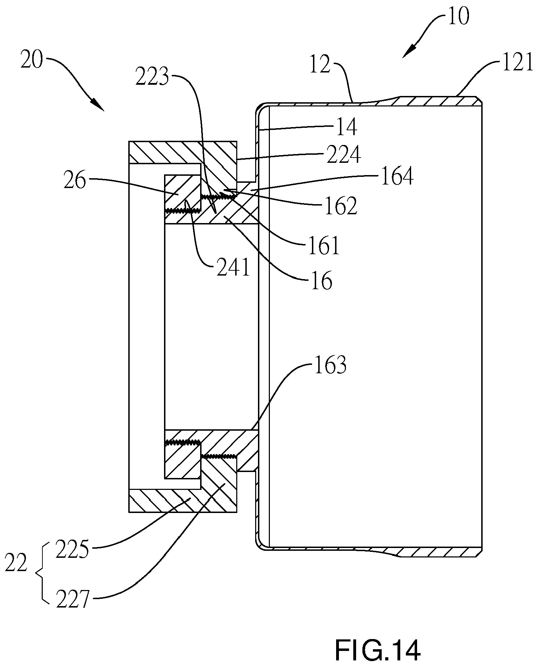

Apart from the third embodiment of the present invention, in which the flex spline 10 of the flex spline engaging structure 100 transmits torque to the mating part 20 in a way of a unidirectional rotation, a fourth embodiment of the present invention is illustrated in FIG. 12 to FIG.14, wherein a flex spline 10 of a flex spline engaging structure 100 could transmits torque to a mating part 20 in a bidirectional way of a positive rotation or a negative rotation.

The flex spline engaging structure 100 includes the flex spline 10 and the mating part 20. The flex spline 10 is a cup shape and has a flexible wall 12. Two opposite sides along an axial direction of the flex spline 10 are defined as a front side and a rear side respectively. A teeth portion 121 is disposed around an outer peripheral surface of the flexible wall 12. The flexible wall 12 is connected to a ring disk 14 which extends inwards. A connecting base 16 is formed on an inner peripheral edge of the ring disk 14, and the connecting base 16 axially protrudes along a direction away from the flexible wall 12 relative to the ring disk 14.

A middle of an outer peripheral surface of the connecting base 16 has a threaded section 161. A position of the outer peripheral surface of the connecting base 16 connected to a rear end of the threaded section 161 of the connecting base 16 has a shoulder portion 164, and an outer diameter of the shoulder portion 164 is larger than an outer diameter of the threaded section 161 of the connecting base 16. A front-end surface of the shoulder portion 164 has a friction surface 162. A position of the outer peripheral surface of the connecting base 16 which is connected to a front end of the threaded section 161 of the connecting base 16 has a reversed threaded section 241, and an outer diameter of the reversed threaded section 241 is smaller than the outer diameter of the threaded section 161 of the connecting base 16, wherein a threaded direction of the reversed threaded section 241 is opposite to a threaded direction of the threaded section 161 of the connecting base 16. An inner side of the connecting base 16 has a through hole 163 which communicates with a room inside the flexible wall 12.

The mating part 20 has a fixing portion 22 which is adapted to be engaged with the flex spline 10. In the current embodiment, the fixing portion 22 includes a bottom ring 225 and an inner ring 227 which extends inwards from a rear-end edge of an inner peripheral surface of the bottom ring 225. An inner peripheral surface of the inner ring 227 has a threaded section 223, and a rear-end surface of the inner ring 227 which is connected to the threaded section 223 of the fixing portion 22 has a friction surface 224. When the mating part 20 is engaged with the flex spline 10 via the fixing portion 22, the threaded section 223 of the fixing portion 22 is engaged with the threaded section 161 of the connecting base 16, and the friction surface 224 of the inner ring 227 abuts against the friction surface 162 of the shoulder portion 164. A fixing nut 26 is engaged with the reversed threaded section 241, wherein the fixing nut 26 abuts against an end surface of the connecting base 16 which is located between the threaded section 161 of the connecting base 16 and the reversed threaded section 241. The shoulder portion 164 of the connecting base 16 abuts against the rear-end surface of the inner ring 227.

When the flex spline 10 according to the fourth embodiment transmits torque to the mating part 20, a friction between the friction surface 162 of the shoulder portion 164 and the friction surface 224 of the inner ring 227 allows the flex spline 10 to transmit torque to the mating part 20 in a way of a positive rotation, or a friction between the fixing nut 26 and the inner ring 227 of the fixing portion 22 allows the flex spline 10 to transmit torque to the mating part 20 in a way of a negative rotation. In this way, the flex spline 10 of the flex spline engaging structure 100 could transmit torque to the mating part 20 in a bidirectional way.

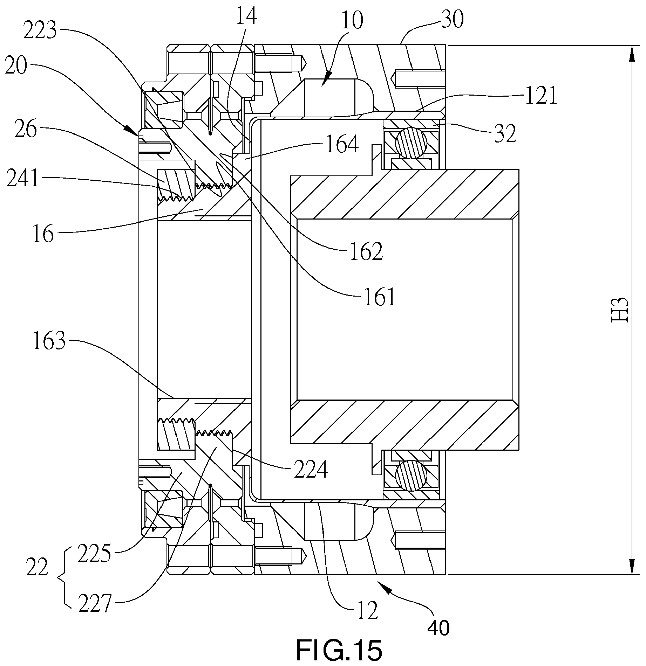

A fifth embodiment of the present invention is illustrated in FIG. 15, in which a flex spline 10 is applied to a harmonic drive 40. The flex spline 10 is a cup shape and has a flexible wall 12. A teeth portion 121 is disposed around an outer peripheral surface of the flexible wall 12. The flexible wall 12 is connected to a ring disk 14 which extends inwards. A connecting base 16 is formed on an inner peripheral edge of the ring disk 14, wherein the connecting base 16 has an inner diameter and an outer diameter. Preferably, a ratio of the inner diameter of the connecting base 16 to the outer diameter of the connecting base 16 is between 0.5 and 0.6 or greater than 0.6, allowing an inner side of the connecting base 16 to provide a sufficient room for wires to pass through. The connecting base 16 axially protrudes along a direction away from the flexible wall 12 relative to the ring disk 14. A middle of an outer peripheral surface of the connecting base 16 has a threaded section 161. A position of the outer peripheral surface of the connecting base 16 which is connected to a rear end of the threaded section 161 of the connecting base 16 has a shoulder portion 164, and an outer diameter of the shoulder portion 164 is larger than an outer diameter of the threaded section 161 of the connecting base 16. A front-end surface of the shoulder portion 164 has a friction surface 162. A position of the outer peripheral surface of the connecting base 16 which is connected to a front end of the threaded section 161 of the connecting base 16 has a reversed threaded section 241, and an outer diameter of the reversed threaded section 241 is smaller than the outer diameter of the threaded section 161 of the connecting base 16, wherein a threaded direction of the reversed threaded section 241 is opposite to a threaded direction of the threaded section 161. An inner side of the connecting base 16 has a through hole 163 which communicates with a room inside the flexible wall 12.

The teeth portion 121 of the flex spline 10 meshes with a circular spline 30, and an inner side of the flexible wall 12 of the flex spline 10 abuts against a wave generator 32. The threaded section 161 of the flex spline 10 is engaged with a mating part 20. The mating part 20 has a fixing portion 22 which is adapted to be engaged with the flex spline 10, wherein the fixing portion 22 includes a bottom ring 225 and an inner ring 227 which extends inwards from a rear-end edge of an inner peripheral surface of the bottom ring 225. An inner peripheral surface of the inner ring 227 has a threaded section 223 of the fixing portion 22, and a rear-end surface of the inner ring 227 which is connected to the threaded section 223 of the fixing portion 22 has a friction surface 224. When the mating part 20 is engaged with the flex spline 10 via the fixing portion 22, the threaded section 223 of the fixing portion 22 is engaged with the threaded section 161 of the connecting base 16, and the friction surface 224 of the inner ring 227 abuts against the friction surface 162 of the shoulder portion 164. A fixing nut 26 is engaged with the reversed threaded section 241, wherein the fixing nut 26 abuts against an end surface of the connecting base 16 which is located between the threaded section 161 of the connecting base 16 and the reversed threaded section 241. The shoulder portion 164 of the connecting base 16 abuts against the rear-end surface of the inner ring 227. When a shaft work is inputted to the wave generator 32 in a rotation direction of a positive rotation or a negative rotation, the mating part 20 could be driven by the flex spline 10 which is reduced in speed in a bidirectional way. In comparison with the conventional hat style harmonic drive, the ring disk 14 of the flex spline 10 of the present invention radially extends inwards, so that an outer diameter H3 of the harmonic drive 40 which applies the flex spline 10 of the present invention could be lowered to 85 mm in some embodiments, in which the outer diameter H3 is obviously smaller than the outer diameter H of the conventional hat style harmonic drive, effectively reducing a volume and a weight of the harmonic drive.

## Claims

1. A flex spline engaging structure (100), comprising:
a flex spline (10) having a flexible wall (12), wherein an outer peripheral surface of the flexible wall (12) has a teeth portion (121); a front-end edge of the flexible wall (12) is connected to a ring disk (14) which extends inwards; a connecting base (16) is formed by an inner peripheral edge of the ring disk (14), and protrudes along an axial direction of the flex spline (10) relative to the ring disk (14); an inner peripheral surface or an outer peripheral surface of the connecting base (16) has a threaded section (161), wherein a portion of the connecting base (16) which is connected to the threaded section (161) has a friction surface (162); and
a mating part (20) having a fixing portion (22), wherein the fixing portion (22) has a threaded section (223); a portion of the fixing portion (22) which is connected to the threaded section (223) of the fixing portion (22) has a friction surface (224); the threaded section (223) of the fixing portion (22) is engaged with the threaded section (161) of the connecting base (16), and the friction surface (224) of the fixing portion (22) abuts against the friction surface (162) of the connecting base (16); the flex spline (10) transmits torque to the mating part (20) through a friction between the friction surface (162) of the connecting base (16) and the friction surface (224) of the fixing portion (22).

2. The flex spline engaging structure (100) as claimed in claim 1, wherein a ratio of an inner diameter of the connecting base (16) to an outer diameter of the connecting base (16) is greater than 0.5.

3. The flex spline engaging structure (100) as claimed in claim 1, wherein an inner side of the connecting base (16) has a through hole (163); a difference between an inner diameter of the connecting base (16) and an outer diameter of the connecting base (16) is in a range of 2 mm to 26 mm.

4. The flex spline engaging structure (100) as claimed in claim 1 to claim 3, wherein the threaded section (161) of the connecting base (16) is formed on the inner peripheral surface of the connecting base (16), and the friction surface (162) of the connecting base (16) is formed on a front-end surface of the connecting base (16) facing the mating part (20).

5. The flex spline engaging structure (100) as claimed in claim 4, wherein the fixing portion (22) protrudes along the axial direction of the flex spline (10) to form a protruding portion (24); an outer peripheral surface of the protruding portion (24) has a reversed threaded section (241), wherein a threaded direction of the reversed threaded section (241) is opposite to a threaded direction of the threaded section (223) of the fixing portion (22); a fixing nut (26) is engaged with the reversed threaded section (241) of the protruding portion (24), and abuts against a rear-end surface of the connecting base (16) opposite to the front-end surface of the connecting base (16).

6. The flex spline engaging structure (100) as claimed in claim 1 to claim 3, wherein the threaded section (161) of the connecting base (16) is formed on the outer peripheral surface of the connecting base (16), and the friction surface (162) of the connecting base (16) is formed on a front-end surface of the connecting base (16) facing the mating part (20).

7. The flex spline engaging structure (100) as claimed in claim 1 to claim 3, wherein the threaded section (161) of the connecting base (16) is formed on the outer peripheral surface of the connecting base (16), and a position of the connecting base (16) which is connected to a rear end of the threaded section (161) of the connecting base (16) has a shoulder portion (164); an outer diameter of the shoulder portion (164) is larger than an outer diameter of the threaded section (161) of the connecting base (16); the friction surface (162) of the connecting base (16) is formed on a front-end surface of the shoulder portion (164) facing the mating part (20).

8. The flex spline engaging structure (100) as claimed in claim 7, wherein a position of the connecting base (16) which is connected to a front end of the threaded section (161) of the connecting base (16) has a reversed threaded section (241); an outer diameter of the reversed threaded section (241) is smaller than an outer diameter of the threaded section (161) of the connecting base (16), and a threaded direction of the reversed threaded section (241) is opposite to a threaded direction of the threaded section (161); a fixing nut (26) is engaged with the reversed threaded section (241), wherein the fixing nut (26) abuts against an end surface of the connecting base (16) which is located between the threaded section (161) of the connecting base (16) and the reversed threaded section (241), and the fixing nut (26) abuts against a surface of the fixing portion (22).

9. A flex spline (10) having a flexible wall (12), wherein an outer peripheral surface of the flexible wall (12) has a teeth portion (121); a front-end edge of the flexible wall (12) is connected to a ring disk (14) which extends inwards; a connecting base (16) is formed by an inner peripheral edge of the ring disk (14), and protrudes along an axial direction of the flex spline (10) relative to the ring disk (14); an inner peripheral surface or an outer peripheral surface of the connecting base (16) has a threaded section (161), wherein a portion of the connecting base (16) which is connected to the threaded section (161) has a friction surface (162); an angle is formed between the friction surface (162) of the connecting base (16) and a peripheral surface of the connecting base (16), allowing the friction surface (162) of the connecting base (16) to be adapted to be abutted to generate a friction for transmission.

10. The flex spline (10) as claimed in claim 9, wherein a ratio of an inner diameter of the connecting base (16) to an outer diameter of the connecting base (16) is greater than 0.5.
